# EUROPEAN PATENT SPECIFICATION

(11) **EP 3 960 524 B1**
(45) Date of publication and mention of the grant of the patent: **28.12.2022**
(21) Application number: 21184951.8
(22) Date of filing: 12.07.2021
(51) Int. Cl.: B60L 53/00

(54) **CHARGING CONNECTOR**
LADESTECKER
CONNECTEUR DE CHARGEUR

(30) Priority: 28.08.2020 JP 2020144551
(43) Date of publication of application: 02.03.2022
(73) Proprietor: Japan Aviation Electronics Industry, Limited, Tokyo 150-0043 (JP)
(72) Inventor: KUGO, Kazuki, Tokyo, 150-0043 (JP)
(74) Representative: Prüfer & Partner mbB Patentanwälte · Rechtsanwälte

(56) References cited:
- EP-A1- 3 118 941
- DE-T5-112014 001 868

## Description

### BACKGROUND OF THE INVENTION:

This invention relates to a charging connector having an emergency withdrawal mechanism.

For example, this type of charging connector having an emergency withdrawal mechanism is disclosed in JP 2017-22055 (Patent Document 1).

As shown in Figs. 27 to 31, Patent Document 1 discloses a charging connector 900 which is mateable with an inlet 980 having a mating lock portion 982. The charging connector 900 comprises a lock lever 910, an operation member 920, a switch 930 and a shell 950. The shell 950 is provided with a cover 940 and a cap 960 which are attached to the shell 950 so as to cover an opening 942 and a hole 955, respectively. A mated state of the charging connector 900 with the inlet 980 is locked by the mating lock portion 982 and a lock portion 912 of the lock lever 910. The switch 930 is used to detect the locked state based on a state of the lock lever 910. In order to protect an operator from electrical shock, the charging connector 900 is controlled so that no current is supplied from the charging connector 900 to the inlet 980 unless the switch 930 detects that the charging connector 900 is mated with the inlet 980 and the mated state is locked.

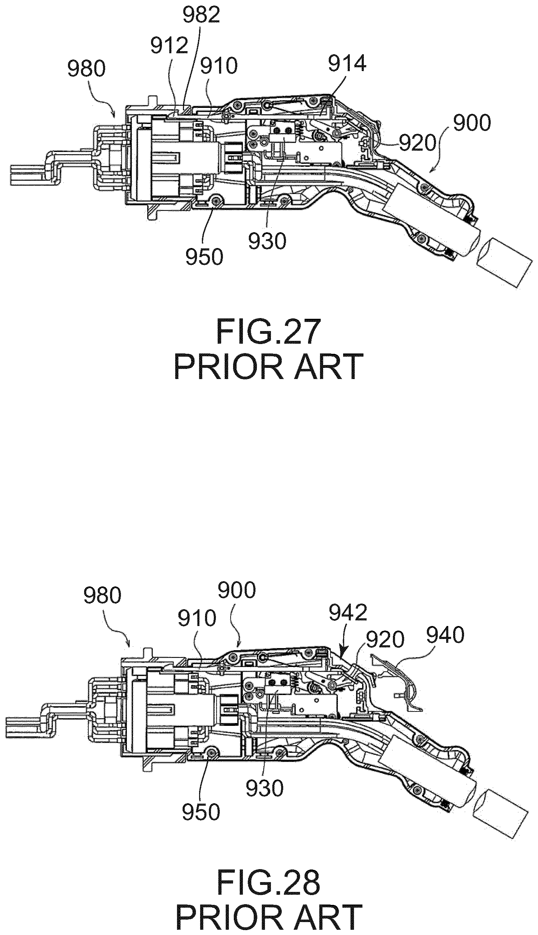

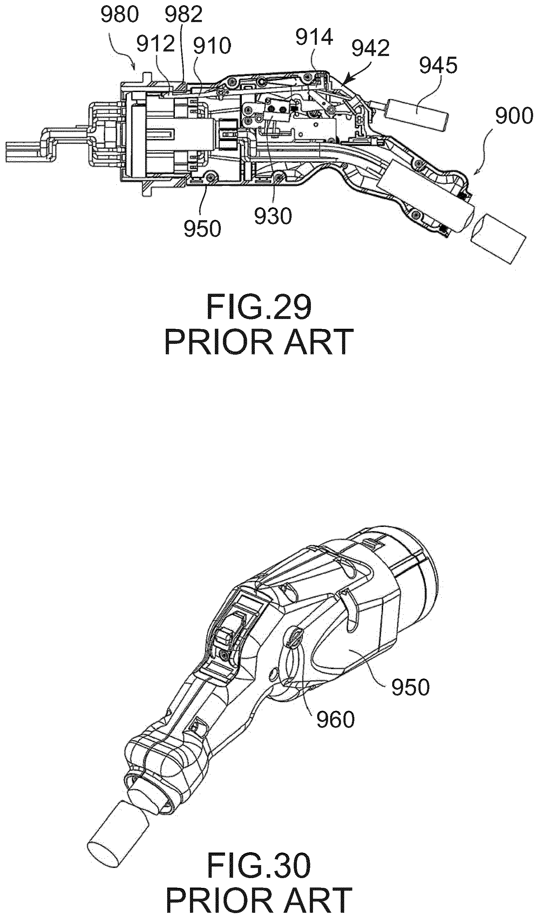

The mated state is usually unlocked by a normal operation in which the operation member 920 is operated so that a rear end 914 of the lock lever 910 is pushed up, and thereby the lock portion 912 is moved downward. However, there is a situation in which the mated state cannot be unlocked by the normal operation because of some reasons such as damage of the operation member 920 and intrusion of foreign matter into the shell 950. In such situation, an emergency withdrawal operation is performed to the charging connector 900 of Patent Document 1 as described below. First, as shown in Fig. 28, the cover 940 is detached. Then, as shown in Fig. 29, a release jig 945 is inserted into the shell 950 through the opening 942. Then, the rear end 914 of the lock lever 910 is pushed up by using the release jig 945, and thereby the lock portion 912 is moved downward. As a result, the mated state is unlocked. The thus-unlocked charging connector 900 can be removed from the inlet 980.

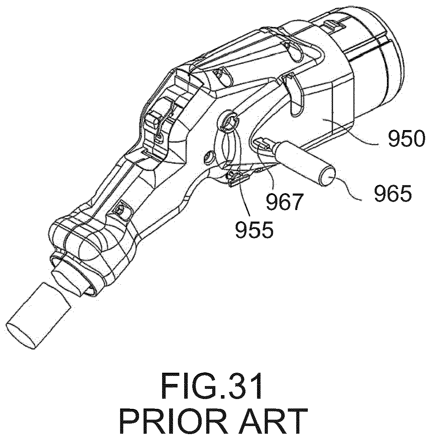

During the emergency withdrawal operation, the switch 930 is moved from its normal position to another position so that accidental current does not flow even when the lock lever 910 is moved. The thus-moved switch 930 should return to the normal position after the emergency withdrawal operation so that the charging connector 900 can be used. Specifically, as can be seen from Figs. 30 and 31, the cap 960 is detached from the shell 950, a return jig 965 is inserted through the hole 955, and the inserted return jig 965 is turned. At that time, the switch 930 is moved to the normal position by a key 967 provided on an end of the return jig 965.

As described above, according to the charging connector 900 of Patent Document 1, the cover 940 should be detached from the shell 950 during the emergency withdrawal operation. Moreover, the cap 960 should be detached from the shell 950 during a return operation subsequent to the emergency withdrawal operation. This structure causes a problem such as loss of the cover 940 and the cap 960 which are detached.

### SUMMARY OF THE INVENTION:

It is therefore an object of the present invention to provide a charging connector which has a structure for preventing loss of components which might be caused because of an emergency withdrawal operation and a return operation.

An aspect of the present invention provides a charging connector mateable with an inlet along a front-rear direction, the inlet having a locked portion. The charging connector comprises an inner unit and a shell. The shell holds the inner unit. The inner unit comprises a lock lever, a first axis, a release-disabling portion and a cap. The shell is formed with an insertion hole into which a release jig is insertable. The lock lever has a lock portion and an abutment portion. The lock lever is movable about the first axis in a seesaw manner. The lock portion is movable between a lock position and an unlock position in an upper-lower direction perpendicular to the front-rear direction in accordance with a seesaw movement of the lock lever. When the lock portion is located at the lock position under a mated state where the charging connector is mated with the inlet, the lock portion and the mating lock portion lock the mated state. When the lock portion is located at the unlock position under the mated state, the charging connector is removable from the inlet. The charging connector is formed with a jig-insertion space which is located under the abutment portion of the lock lever in the upper-lower direction. The cap is attached to the shell and is partially exposed outward from the shell. The cap is movable between an accommodated position and a pulled-out position in a lateral direction perpendicular to both the front-rear direction and the upper-lower direction and is rotatable between a first rotation position and a second rotation position about an axis extending in the lateral direction. The release-disabling portion is movable at least in the upper-lower direction between a disabling position and an allowing position which is located below the disabling position. When the cap is located at the accommodated position and is located at the first rotation position, the release-disabling portion is located at the disabling position, and the cap supports the release-disabling portion. When the release-disabling portion is located at the disabling position, the release-disabling portion partially occupies the jig-insertion space, and the release jig is not insertable into the jig-insertion space through the insertion hole. When the cap is located at the pulled-out position and is located at the first rotation position, the cap does not support the release-disabling portion, and the release-disabling portion is movable to the allowing position, but the cap is unmovable to the accommodated position from the pulled-out position. When the release-disabling portion is located at the allowing position, the release jig is allowed to be inserted into the jig-insertion space through the insertion hole and is allowed to lift up the abutment portion so that the lock portion is moved to the unlock position. When the cap is located at the pulled-out position and is located at the second rotation position, the cap is movable to the accommodated position. Under a state where the cap is located at the accommodated position and is located at the second rotation position, when the cap is moved to the first rotation position from the second rotation position, the cap lifts up the release-disabling portion, and the release-disabling portion is moved to the disabling position.

In an emergency withdrawal operation according to an aspect of the present invention, the release-disabling portion is moved in the shell to the allowing position from the disabling position by pulling out the cap, which is attached to the shell, to the pulled-out position, and thereby the release jig becomes insertable into the jig-insertion space. The thus-inserted release jig can move the abutment portion of the lock-lever so that the lock of the mated state is released. Moreover, in a return operation according to an aspect of the present invention, the cap located at the pulled-out position is rotated to the second rotation position from the first rotation position, subsequently moved to the accommodation position from the pulled-out position and is subsequently moved to the first rotation position from the second rotation position. During this return operation, the cap lifts up the release-disabling portion, and the release-disabling portion can be moved to the disabling position. As described above, each of the emergency withdrawal operation and the return operation according to an aspect of the present invention is performed by moving the portions and the members located in the shell. Therefore, an aspect of the present invention provides the charging connector which can prevent loss of components which might be caused because of the emergency withdrawal operation and the return operation.

An appreciation of the objectives of the present invention and a more complete understanding of its structure may be had by studying the following description of the preferred embodiment and by referring to the accompanying drawings.

### BRIEF DESCRIPTION OF THE DRAWINGS:

Fig. 1 is a perspective view showing a charging connector according to an embodiment of the present invention, wherein a cap is located at an accommodated position.
Fig. 2 is a perspective view roughly showing an inner structure of the charging connector of Fig. 1.
Fig. 3 is a perspective view showing an inner unit of the charging connector of Fig. 1.
Fig. 4 is a left side view showing the inner unit of Fig. 3.
Fig. 5 is a rear view showing the inner unit of Fig. 3.
Fig. 6 is a right side view showing the inner unit of Fig. 3.
Fig. 7 is another perspective view showing the inner unit of Fig. 3, wherein the cap is detached from a support portion.
Fig. 8 is a perspective view showing a lock lever of the inner unit of Fig. 3.
Fig. 9 is a perspective view showing a switch and a switch plate of the inner unit of Fig. 3.
Fig. 10 is a side view showing a shell of the charging connector of Fig. 1.
Fig. 11 is a perspective view showing the shell of Fig. 10.
Fig. 12 is a perspective view showing the cap of the inner unit of Fig. 3.
Fig. 13 is another perspective view showing the cap of Fig. 12.
Fig. 14 is a side view showing a combined structure of the shell of Fig. 10 and the cap of Fig. 13.
Fig. 15 is a side view showing an inner structure of the charging connector of Fig. 1, wherein a release-disabling portion is located at a disabling position, and a release jig cannot be inserted into a jig-insertion space.
Fig. 16 is another perspective view showing the charging connector of Fig. 1, wherein the cap is located at a pulled-out position.
Fig. 17 is a perspective view showing the inner unit of the charging connector of Fig. 16, wherein the release-disabling portion is located at an allowing position, and the jig-insertion space is available.
Fig. 18 is a side view showing the inner structure of the charging connector of Fig. 16, wherein the inner structure is formed with a passage which extends from an insertion hole to the jig-insertion space.
Fig. 19 is another side view showing the inner structure of the charging connector of Fig. 18, wherein the release jig is inserted into the shell through the passage.
Fig. 20 is another perspective view showing the charging connector of Fig. 16, wherein the cap is rotated to a second rotation position by using a return jig.
Fig. 21 is a perspective view showing the inner unit of the charging connector of Fig. 20.
Fig. 22 is another perspective view showing the charging connector of Fig. 20, wherein the cap is moved to the accommodated position by using the return jig.
Fig. 23 is a perspective view showing the inner unit of the charging connector of Fig. 22.
Fig. 24 is a cross-sectional view showing the inner unit of Fig. 23, taken along line A-A of Fig. 5.
Fig. 25 is another perspective view showing the charging connector of Fig. 22, wherein the cap is rotated to a first rotation position by using the return jig.
Fig. 26 is a cross-sectional view showing the inner unit of Fig. 5, taken along line A-A.
Fig. 27 is a side view showing a combined inner structure of a charging connector and an inlet of Patent Document 1.
Fig. 28 is another side view showing the combined inner structure of Fig. 27, wherein a cover is detached.
Fig. 29 is another side view showing the combined inner structure of Fig. 28, wherein a release jig is inserted through an opening.
Fig. 30 is perspective view showing the charging connector of Fig. 27.
Fig. 31 is another perspective view showing the charging connector of Fig. 30, wherein a cap is detached.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DESCRIPTION OF PREFERRED EMBODIMENTS:

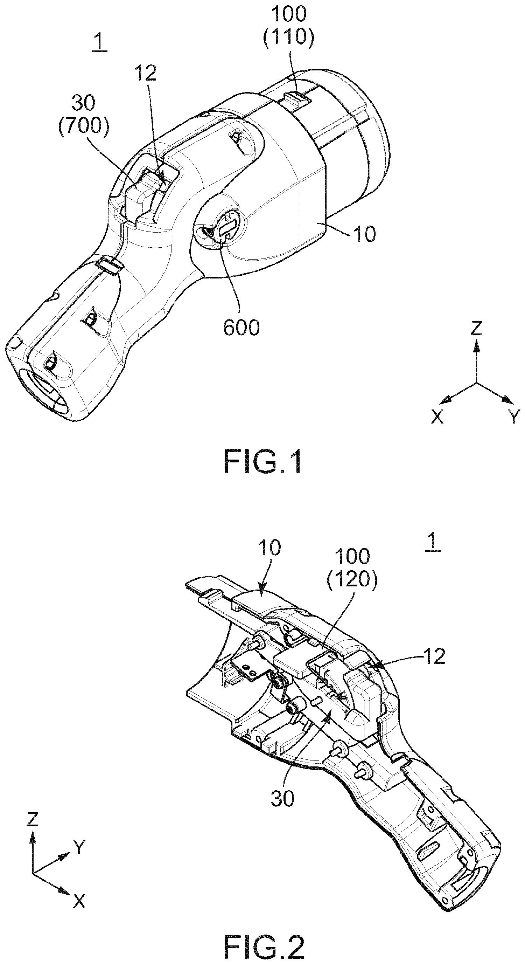

Referring to Figs. 1 and 2, a charging connector 1 according to an embodiment of the present invention is mateable with an inlet (not shown) along a front-rear direction. For example, the inlet is provided in an electric car. The inlet has a locked portion as shown in Patent Document 1. In the present embodiment, the front-rear direction is the X-direction. "Forward" means the negative X-direction. "Rearward" means the positive X-direction.

The charging connector 1 comprises a shell 10 and an inner unit 30 which is accommodated in and held by the shell 10.

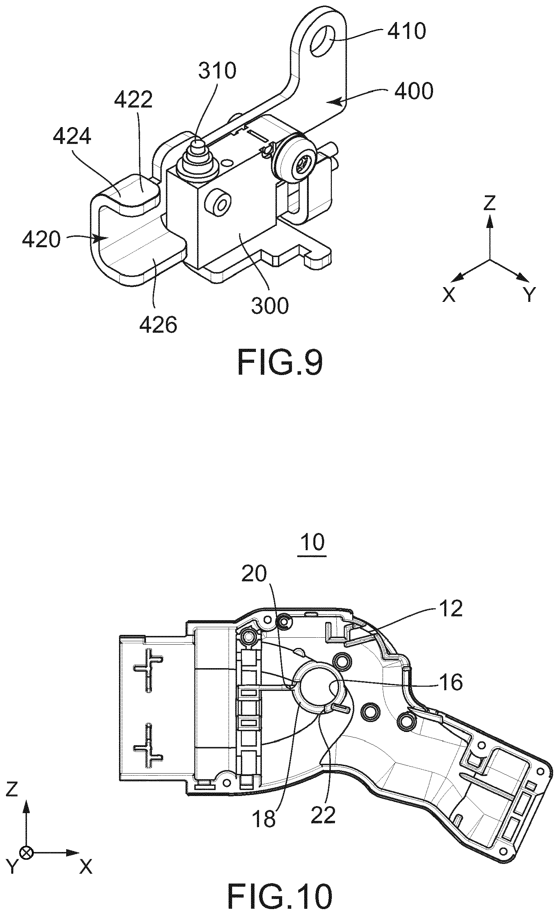

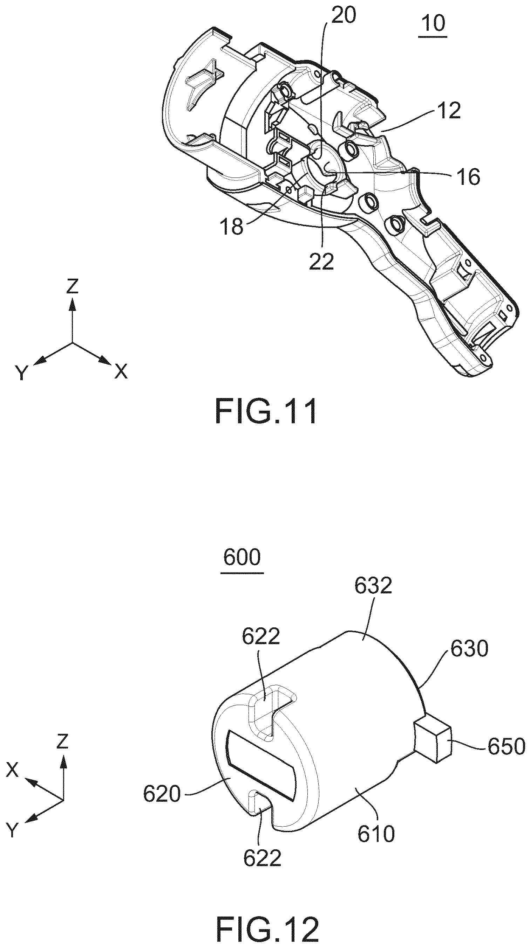

Referring to Figs. 10 and 11, the shell 10 is formed with an insertion hole 12 and an accommodation hole 16 and is provided with a stop portion 18, a first rotation-regulation portion 20 and a second rotation-regulation portion 22.

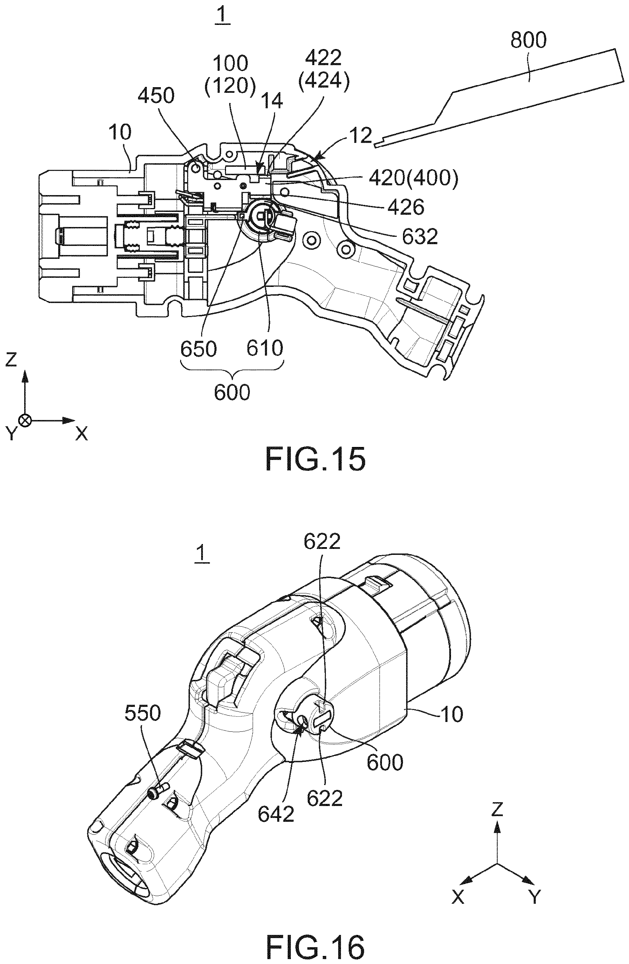

As shown in Figs. 1 and 2, the insertion hole 12 of the present embodiment is opened rearward regardless of a state of the charging connector 1. Referring to Figs. 15, 18 and 19, as described later, the insertion hole 12 is used so that a release jig 800 is inserted therein upon an emergency withdrawal operation. However, the present invention is not limited thereto. For example, the shell 10 may be provided with a shutter which makes the insertion hole 12 be opened or closed, and thereby the insertion hole 12 may be opened as necessary.

As can be seen from Figs. 10 and 11, the accommodation hole 16 passes through the shell 10 in a lateral direction and has a circular shape in a plane perpendicular to the lateral direction. In the present embodiment, the lateral direction is the Y-direction. "Rightward" means the positive Y-direction. "Leftward" means the negative Y-direction. The plane perpendicular to the lateral direction is the XZ-plane.

The stop portion 18 is located inside the shell 10 and is located around the accommodation hole 16. The stop portion 18 of the present embodiment has an arc shape of a quarter circle. The first rotation-regulation portion 20 and the second rotation-regulation portion 22 are provided on opposite ends of the arc shape of the stop portion 18, respectively. The first rotation-regulation portion 20 and the second rotation-regulation portion 22 protrude inward in the shell 10 from the stop portion 18 in the lateral direction. The illustrated first rotation-regulation portion 20 and the illustrated second rotation-regulation portion 22 protrude leftward from the stop portion 18. In other words, the stop portion 18 is recessed outward from the first rotation-regulation portion 20 and the second rotation-regulation portion 22 in the lateral direction. The illustrated stop portion 18 is recessed rightward.

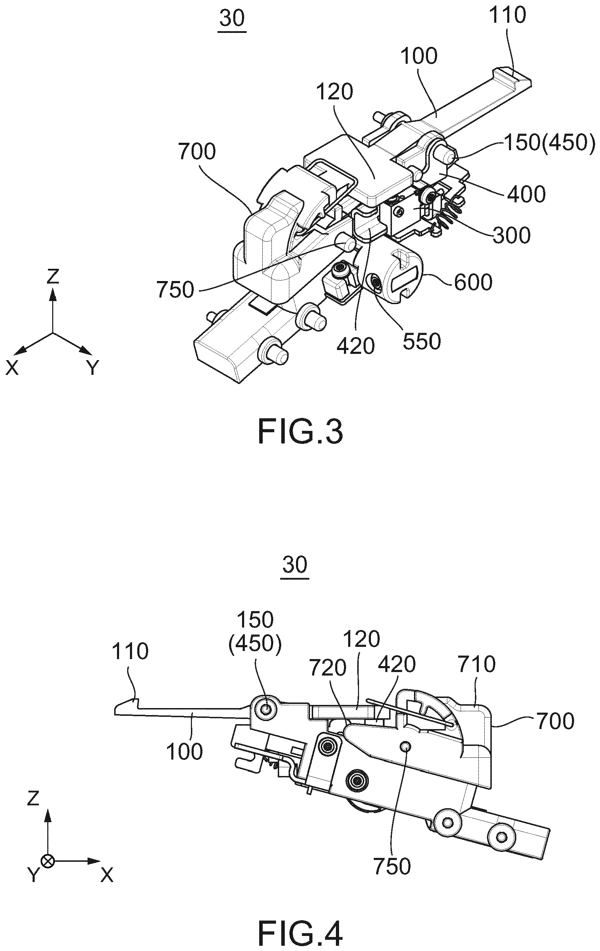

Referring to Figs. 3 to 7, the inner unit 30 comprises a lock lever 100, a first axis 150, a detection switch 300, a switch plate 400, a spring 430, a second axis 450, a screw-receiving portion 500, a male screw 550, a support portion 570, an operation member 700 and a third axis 750.

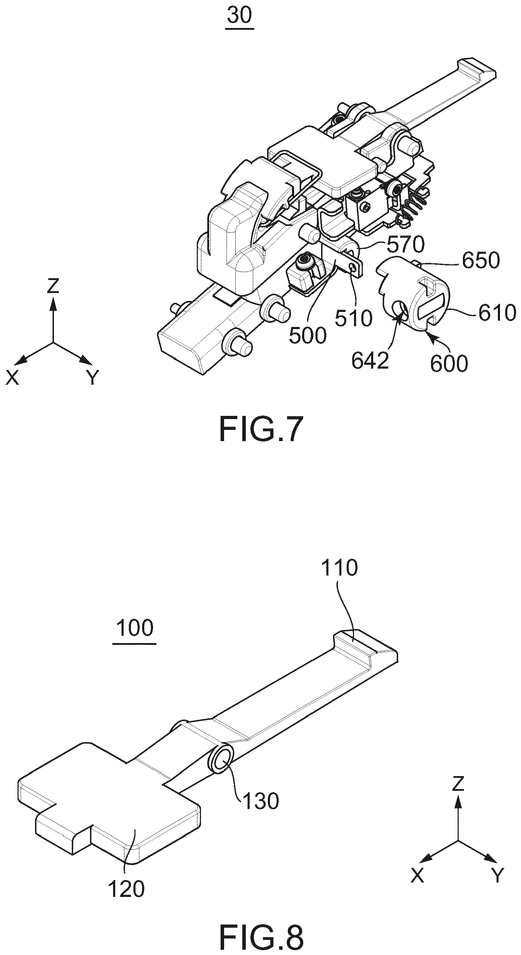

As shown in Fig. 8, the lock lever 100 has a lock portion 110, an abutment portion 120 and a first bearing 130. The lock portion 110 of the present embodiment is provided at a front end of the lock lever 100. In the lock lever 100 of the present embodiment, the first bearing 130 is located between the lock portion 110 and the abutment portion 120. The abutment portion 120 of the present embodiment is provided at a rear end of the lock lever 100. However, the present invention is not limited thereto. For example, the abutment portion 120 may be located between the lock portion 110 and the first bearing 130.

As can be seen from Figs. 3 and 8, the first axis 150 is located between the lock portion 110 and the abutment portion 120. The first bearing 130 is supported by the first axis 150 to be rotatable. The thus-supported lock lever 100 is movable about the first axis 150 in a seesaw manner. However, the present invention is not limited thereto. For example, the first axis 150 may be integrally formed with the lock lever 100. In this modification, the inner unit 30 or the shell 10 may be provided with the first bearing 130.

The lock portion 110 is movable between a lock position and an unlock position in an upper-lower direction perpendicular to the front-rear direction in accordance with the seesaw movement of the lock lever 100. In the present embodiment, the upper-lower direction is the Z-direction. "Upward" means the positive Z-direction. "Downward" means the negative Z-direction. The lock position of the present embodiment is located above the unlock position. However, the present invention is not limited thereto, but the unlock position may be located above the lock position.

When the lock portion 110 is located at the lock position under a mated state where the charging connector 1 is mated with the inlet (not shown), the lock portion 110 and the locked portion of the inlet lock the mated state. When the lock portion 110 is located at the unlock position under the mated state, the charging connector 1 is removable from the inlet.

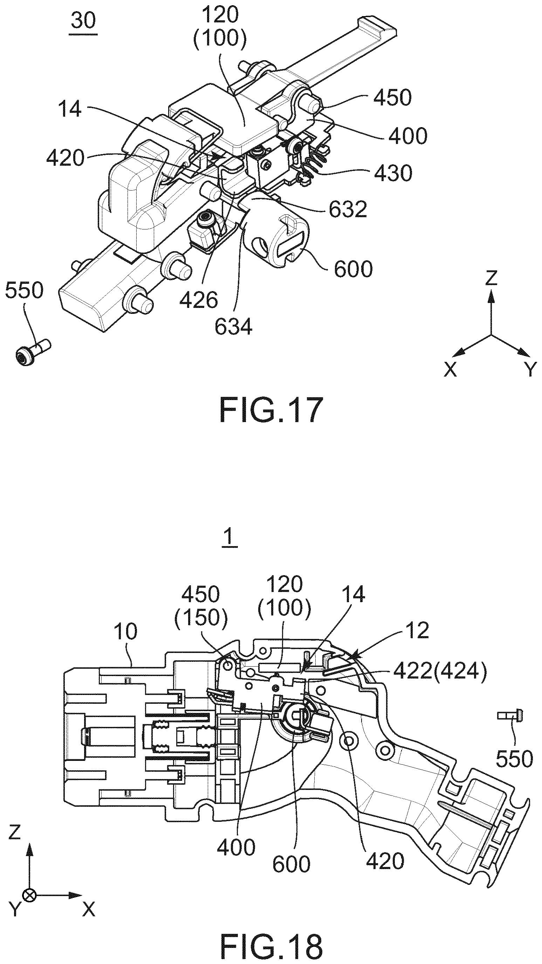

As shown in Figs. 15 and 18, the charging connector 1 is formed with a jig-insertion space 14 which is located under the abutment portion 120 of the lock lever 100 in the upper-lower direction. Under a predetermined state shown in Fig. 18, the insertion hole 12 and the jig-insertion space 14 communicate with each other. Explanation about the predetermined state will be made later.

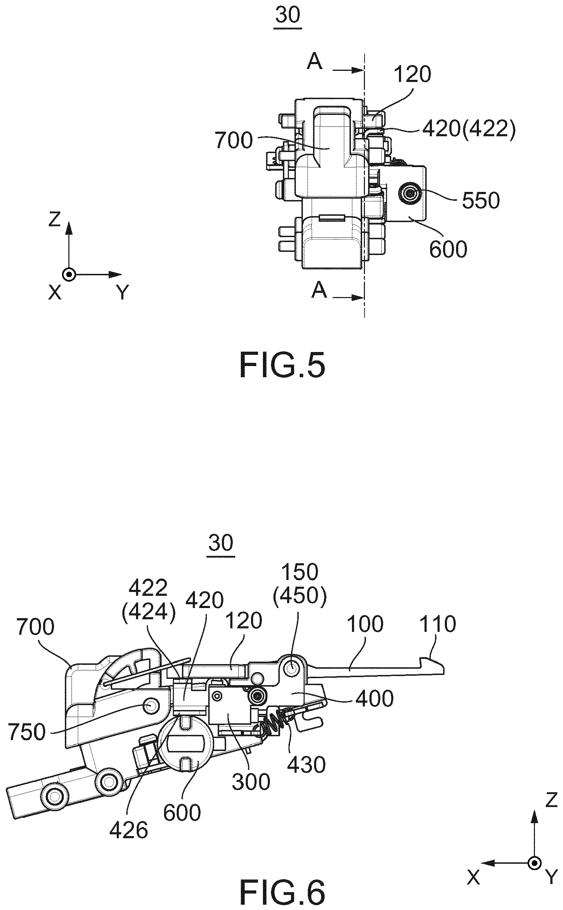

Referring to Fig. 6, the detection switch 300 is configured to detect a posture of the lock lever 100 or the position of the lock portion 110. As shown in Fig. 9, the detection switch 300 has a switch button 310. Referring to Figs. 6 and 9, when the lock portion 110 is located at the lock position, the abutment portion 120 presses down the switch button 310 so that the detection switch 300 is turned on. When the lock portion 110 is located at the unlock position, the detection switch 300 is turned off. The charging connector 1 takes either a current-supplying state or a current-cut-off state depending on this state of the lock lever 100 detected by the detection switch 300.

As shown in Fig. 9, the switch plate 400 supports the detection switch 300. The illustrated switch plate 400 has a second bearing 410 and a release-disabling portion 420. Thus, a part of the switch plate 400 of the present embodiment works as the release-disabling portion 420. Moreover, the inner unit 30 (see Fig. 3) comprises the release-disabling portion 420.

As can be seen from Figs. 3, 8 and 17, the second bearing 410 is supported by the second axis 450 to be rotatable. The switch plate 400 which has the thus-supported second bearing 410 is turnable about the second axis 450. However, the present invention is not limited thereto. For example, the second axis 450 may be integrally formed with the switch plate 400. In this modification, the inner unit 30 or the shell 10 may be provided with the second bearing 410.

The switch plate 400 of the present embodiment is movable between a normal position shown in Fig. 3 and a retracted position shown in Fig. 17. When the switch plate 400 is located at the normal position, the detection switch 300 is turned on under a state where the lock portion 110 is located at the lock position and turned off under another state where the lock portion 110 is located at the unlock position. When the switch plate 400 is located at the retracted position, the detection switch 300 is turned off regardless of the position of the lock portion 110. Thus, when the switch plate 400 is located at the retracted position, the detection switch 300 artificially detects that the lock portion 110 is located at the unlock position.

As can be seen from Fig. 3, the first axis 150 and the second axis 450 of the present embodiment are formed of a unitary member. However, the present invention is not limited thereto. For example, the first axis 150 and the second axis 450 may be members separated from each other.

As shown in Fig. 9, the release-disabling portion 420 has a C-like shaped cross-section. The thus-shaped release-disabling portion 420 has an upper end portion 422 and a lower end portion 426. The release-disabling portion 420 of the present embodiment is located near the detection switch 300 and is located rearward of the detection switch 300. As previously described, the release-disabling portion 420 of the present embodiment is formed as a part of the switch plate 400. The thus-formed release-disabling portion 420 is moved in accordance with the movement of the switch plate 400. In detail, the release-disabling portion 420 is movable between a disabling position shown in Fig. 3 and an allowing position shown in Fig. 17. In the present embodiment, when the switch plate 400 is located at the normal position, the release-disabling portion 420 is located at the disabling position. When the switch plate 400 is located at the retracted position, the release-disabling portion 420 is located at the allowing position. When the release-disabling portion 420 is located at the allowing position as a result of the movement of the switch plate 400, the detection switch 300 detects that the lock portion 110 is artificially located at the unlock position.

As can be seen from Figs. 3 and 17, the allowing position is located below the disabling position in the upper-lower direction. As can be seen from Figs. 3 and 9, when the release-disabling portion 420 is located at the disabling position, the upper end portion 422 of the release-disabling portion 420 is close to the abutment portion 120 of the lock lever 100, and thereby no jig can be inserted between the upper end portion 422 and the abutment portion 120. As can be seen from Figs. 9 and 17, when the release-disabling portion 420 is located at the allowing position, the upper end portion 422 of the release-disabling portion 420 is apart from the abutment portion 120 of the lock lever 100, and thereby a jig can be inserted between the upper end portion 422 of the release-disabling portion 420 and the abutment portion 120 of the lock lever 100.

As shown in Fig. 9, the upper end portion 422 of the release-disabling portion 420 has an exposed portion 424. In detail, a part of a rear part of the upper end portion 422 works as the exposed portion 424. As shown in Figs. 6 and 15, when the release-disabling portion 420 is located at the disabling position, the exposed portion 424 is located rearward of the abutment portion 120 of the lock lever 100 and is exposed from the abutment portion 120. The thus-provided exposed portion 424 is useful in the emergency withdrawal operation as described later.

The spring 430 is hooked on a part of the switch plate 400 and applies a force to the switch plate 400 in an attempt to move the switch plate 400 to the retracted position. As described above, the retracted position of the switch plate 400 and the allowing position of the release-disabling portion 420 correspond to each other. As can be seen from this positional relation, the spring 430 of the present embodiment constantly attempts to move the release-disabling portion 420 toward the allowing position. In other words, the inner unit 30 of the charging connector 1 of the present embodiment comprises a mechanism for urging the release-disabling portion 420 to be moved toward the allowing position. However, the present invention is not limited thereto, but no mechanism such as the spring 430 may be provided. In a modification in which this mechanism is not provided, the release-disabling portion 420 should be directly or indirectly operated to be moved to the allowing position as necessary.

As shown in Fig. 7, the screw-receiving portion 500 is a part of a metal member included in the inner unit 30, and the support portion 570 is a part of a resin member included in the inner unit 30. The screw-receiving portion 500 is formed with a female screw 510 which is threaded therein. As described later, the female screw 510 corresponds to the male screw 550 shown in Fig. 3. As shown in Fig. 7, the support portion 570 has a shape like a part of a cylinder. The support portion 570 supports the screw-receiving portion 500. The screw-receiving portion 500 of the present embodiment projects outward in the lateral direction beyond the support portion 570. This projected part of the screw-receiving portion 500 is formed with the female screw 510. As described later, the cap 600 is attached to the screw-receiving portion 500 and the support portion 570 so that the screw-receiving portion 500 and the support portion 570 are received therein.

As shown in Fig. 4, the operation member 700 has an operation portion 710 and a front end portion 720. The third axis 750 is located between the operation portion 710 and the front end portion 720. The operation member 700 is movable about the third axis 750 in a seesaw manner. The front end portion 720 is located under the abutment portion 120 of the lock lever 100. When the operation portion 710 is pushed down, the front end portion 720 pushes up the abutment portion 120 of the lock lever 100 to move the lock portion 110 from the lock position to the unlock position. Thus, when the operation portion 710 is pushed down, the lock by the lock portion 110 can be released. In other words, when the operation portion 710 is pushed down, the mated state is unlocked. The inner unit 30 comprises an operation-regulation mechanism (not specifically shown) which is located below the operation member 700 and includes some members such as a plunger. The operation-regulation mechanism is a mechanism for regulating the operation of the operation member 700 so that the operation portion 710 is not unintentionally pushed down when the charging connector 1 is used to charge electric power.

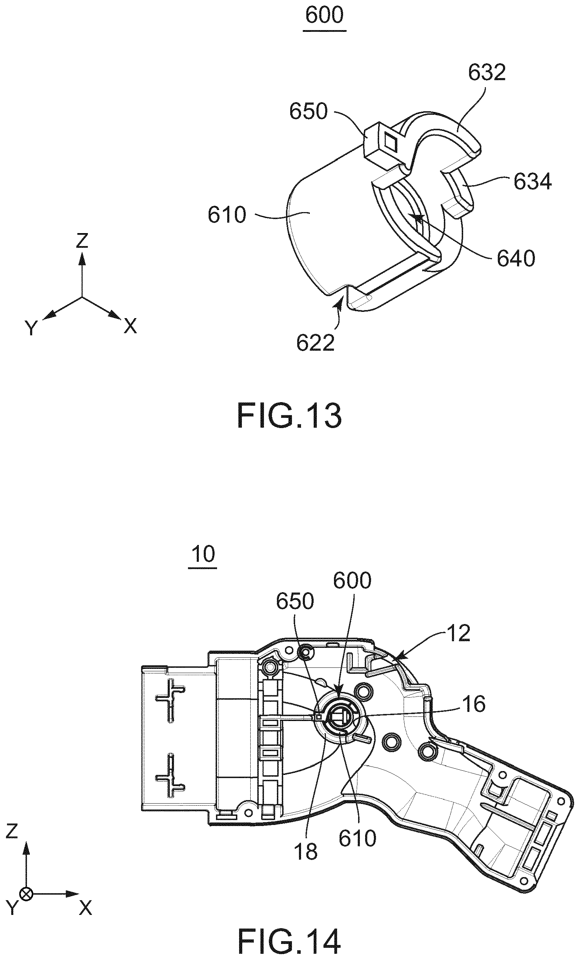

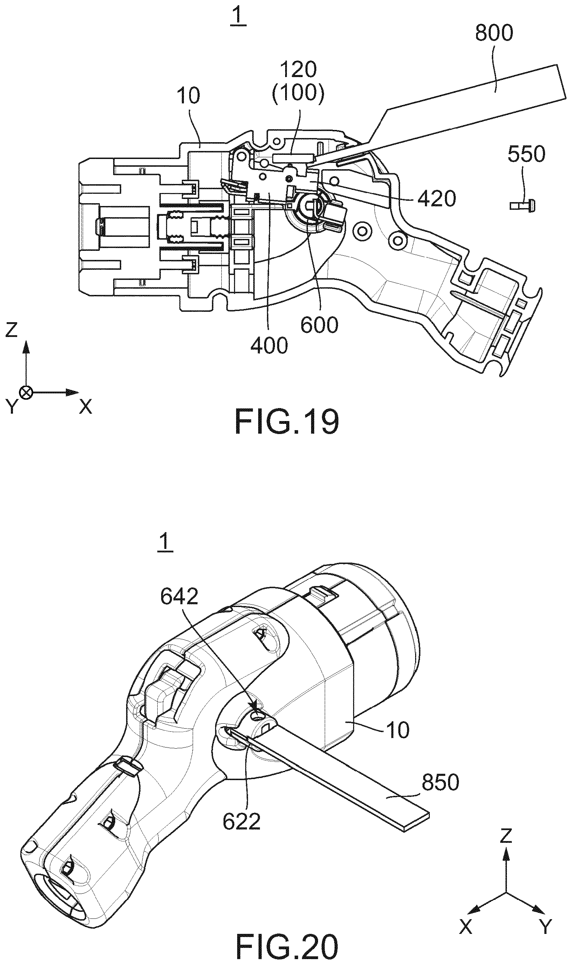

As shown in Figs. 12 and 13, the cap 600 has a main portion 610 and a projecting portion 650. The main portion 610 has a circular outline in a plane perpendicular to the lateral direction. The main portion 610 has a first end 620 and a second end 630 in the lateral direction. Thus, the cap 600 is provided with the first end 620 and the second end 630 in the lateral direction. The first end 620 of the present embodiment is a left end of the main portion 610. The second end 630 of the present embodiment is a right end of the main portion 610. The first end 620 is substantially closed. The second end 630 is opened. The first end 620 is provided with a jig-engagement portion 622. The jig-engagement portion 622 of the present embodiment includes two recessed portions. As shown in Fig. 20, the jig-engagement portion 622 is configured so that a return jig 850 is fit to the jig-engagement portion 622 as described later. Referring to Figs. 12 and 13, the projecting portion 650 projects outward from a part of the main portion 610, which is located in the vicinity of the second end 630, in a plane perpendicular to the lateral direction. The second end 630 of the main portion 610 is provided with a long end portion 632 and a short end portion 634. The long end portion 632 extends in the lateral direction to a position which is farther from the first end 620 than another position to which the short end portion 634 extends in the lateral direction. The long end portion 632 of the present embodiment extends leftward beyond the short end portion 634. As shown in Figs. 7 and 13, the main portion 610 is formed with a receiving portion 640 and a hole 642. The receiving portion 640 is recessed to have a cylindrical shape. The receiving portion 640 is configured to receive the screw-receiving portion 500 and the support portion 570 in the lateral direction. The thus-formed main portion 610 has a cylindrical shape which has a bottom at the first end 620. The hole 642 communicates with the receiving portion 640, which is a space inside the cap 600, and a space outside the cap 600 in a direction intersecting with the lateral direction. As can be seen from Figs. 7 and 16, the hole 642 is used when the male screw 550 is screwed into the female screw 510 of the screw-receiving portion 500 which is received in the cap 600. In other words, the hole 642 is a hole for allowing insertion of the male screw 550 therein.

As can be seen from Figs. 2, 3 and 11, the cap 600 is attached to the shell 10 as a part of the inner unit 30. The main portion 610 of the thus-attached cap 600 is partially accommodated in the accommodation hole 16 of the shell 10. The first end 620 of the cap 600 is exposed outward from the shell 10 while the second end 630 is located inside the shell 10. Under a normal state, the male screw 550 is screwed into the female screw 510 of the screw-receiving portion 500 through the hole 642. Therefore, the cap 600 is fixed and cannot be moved.

The cap 600 becomes movable when the male screw 550 is detached. The receiving portion 640 of the cap 600 is a cylindrical recess in which the shape of the support portion 570 is accommodatable. The thus-formed cap 600 is movable in the lateral direction and is rotatable about an axis extending in the lateral direction when the cap 600 is not fixed by the male screw 550. However, as described below, the structure of the shell 10 limits the movement of the cap 600 so that the cap 600 is not separable out of the shell 10.

As can be seen from Figs. 7 and 10 to 14, when the male screw 550 is detached, the cap 600 is movable in the lateral direction. However, upon an attempt to pull the cap 600 out of the shell 10, the projecting portion 650 is brought into abutment with the stop portion 18. The position of the cap 600 in the lateral direction at this time is referred to "pulled-out position". On the other hand, an initial position of the cap 600, which is a position of the cap 600 in the lateral direction under a state where the male screw 550 is screwed, is referred to as "accommodated position". Thus, the cap 600 of the present embodiment is movable between the accommodated position and the pulled-out position in the lateral direction when the male screw 550 is detached. Even if it is attempted to pull out the cap 600 outward in the lateral direction beyond the pulled-out position, the projecting portion 650 is brought into abutment with the stop portion 18 so that the cap 600 is prevented from being pulled out beyond the pulled-out position. As described above, the projecting portion 650 and the stop portion 18 of the present embodiment work as a retaining mechanism for the cap 600. However, the present invention is not limited thereto, but the retaining mechanism may have the other structure.

When the male screw 550 is detached, the cap 600 is rotatable about the axis extending in the lateral direction. However, upon an attempt to rotate the cap 600, the projecting portion 650 is brought into abutment with the first rotation-regulation portion 20 or the second rotation-regulation portion 22 depending on the position of the projecting portion 650 in the lateral direction. The position of the cap 600 under a state where the projecting portion 650 is brought into abutment with the first rotation-regulation portion 20 is referred to as "first rotation position". The position of the cap 600 under another state where the projecting portion 650 is brought into abutment with the second rotation-regulation portion 22 is referred to as "second rotation position". Thus, the cap 600 of the present embodiment is rotatable between the first rotation position and the second rotation position about the axis extending in the lateral direction when the male screw 550 is detached. Even if a rotation beyond the first rotation position is attempted, the projecting portion 650 is brought into abutment with the first rotation-regulation portion 20 so that the attempted rotation cannot be performed. Similarly, even if another rotation beyond the second rotation position is attempted, the projecting portion 650 is brought into abutment with the second rotation-regulation portion 22 so that the attempted rotation cannot be performed. Thus, the first rotation-regulation portion 20 and the second rotation-regulation portion 22 work as a rotation-regulation portion which regulates a rotation of the cap 600 so that the cap 600 is rotatable only between the first rotation position and the second rotation position. The shell 10 is provided with the rotation-regulation portion which includes the first rotation-regulation portion 20 and the second rotation-regulation portion 22.

As described above, the cap 600 of the present embodiment is movable between the accommodated position and the pulled-out position in the lateral direction and is rotatable between the first rotation position and the second rotation position about the axis extending in the lateral direction. The long end portion 632 and the short end portion 634 have a structure which enables the movement described below in accordance with a combination among the accommodated position, the pulled-out position, the first rotation position and the second rotation position. Hereafter, explanation will be made about the position of the cap 600, the emergency withdrawal operation and a return operation with reference to drawings.

As shown in Figs. 1, 3, 15 and 26, when the cap 600 is located at the accommodated position and is located at the first rotation position, the long end portion 632 supports the lower end portion 426 of the release-disabling portion 420, and the release-disabling portion 420 is located at the disabling position. As previously described, the spring 430 shown in Fig. 6 constantly applies a force which moves the release-disabling portion 420 to the allowing position. However, since the long end portion 632 of the cap 600 supports the lower end portion 426 of the release-disabling portion 420, the release-disabling portion 420 is unmovable to the allowing position from the disabling position.

As shown in Fig. 15, when the release-disabling portion 420 is located at the disabling position, the release-disabling portion 420 partially occupies the jig-insertion space 14. Therefore, the release jig 800 is not insertable into the jig-insertion space 14 through the insertion hole 12. The charging connector 1 takes the state described above when used for its intended purpose. The emergency withdrawal operation described below is performed under this state, for example, in a situation in which the mated state cannot be unlocked even when the operation portion 710 of the operation member 700 shown in Fig. 1 is pushed.

As shown in Figs. 16 to 18, first, the male screw 550 is detached so that the cap 600 is made movable. Then, the cap 600 is moved to the pulled-out position from the accommodated position. When the cap 600 is located at the pulled-out position and is located at the first rotation position, the long end portion 632 is apart from the lower end portion 426 of the release-disabling portion 420 in the lateral direction. The thus-located cap 600 does not support the release-disabling portion 420. Therefore, the release-disabling portion 420 is movable to the allowing position. Since the inner unit 30 of the present embodiment has the spring 430, the spring 430 moves the release-disabling portion 420 to the allowing position at the time when the support of the release-disabling portion 420 by the cap 600 is lost. As can be seen from Figs. 17 and 18, when the release-disabling portion 420 is moved to the allowing position, a position of the long end portion 632 overlaps with another position of the release-disabling portion 420 in the upper-lower direction. In other words, the long end portion 632 overlaps with the release-disabling portion 420 as seen along the lateral direction. Therefore, the cap 600 is unmovable to the accommodated position from the pulled-out position. The cap 600 of the present embodiment, which is moved to the pulled-out position, cannot return to the accommodated position unless the return operation is performed as described later.

The release-disabling portion 420 of the present embodiment is provided as a part of the switch plate 400. When the thus-provided release-disabling portion 420 is moved to the allowing position, the switch plate 400 is moved to the retracted position. As a result, the charging connector 1 changes its state to the current-cut-off state, and thereby electrical shock of an operator can be prevented during the emergency withdrawal operation.

Referring to Figs. 18 and 19, when the release-disabling portion 420 is located at the allowing position, the release jig 800 is allowed to be inserted into the jig-insertion space 14 through the insertion hole 12. The thus-inserted release jig 800 is allowed to lift up the abutment portion 120 of the lock lever 100 so that the lock portion 110 is moved to the unlock position. In other words, the mated state can be unlocked.

The release-disabling portion 420 of the present embodiment has the exposed portion 424. According to this structure, the end of the release jig 800 is easily brought into abutment with the exposed portion 424 when the release jig 800 is inserted through the insertion hole 12. For example, even when the inside of the charging connector 1 is hardly seen through the insertion hole 12, the end the release jig 800 can be easily located under the abutment portion 120.

Hereafter, explanation will be made about the return operation in which the cap 600 returns to the accommodated position, and the release-disabling portion 420 returns to the disabling position.

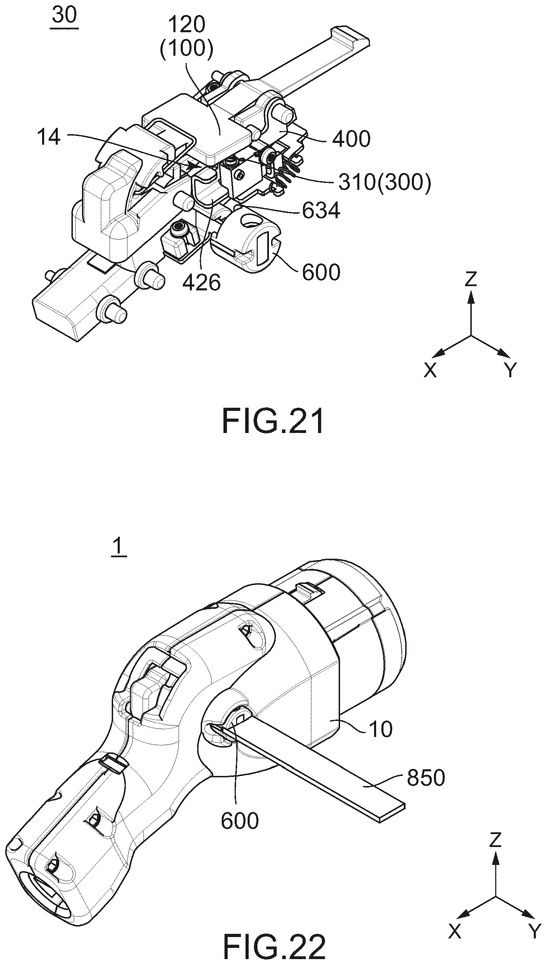

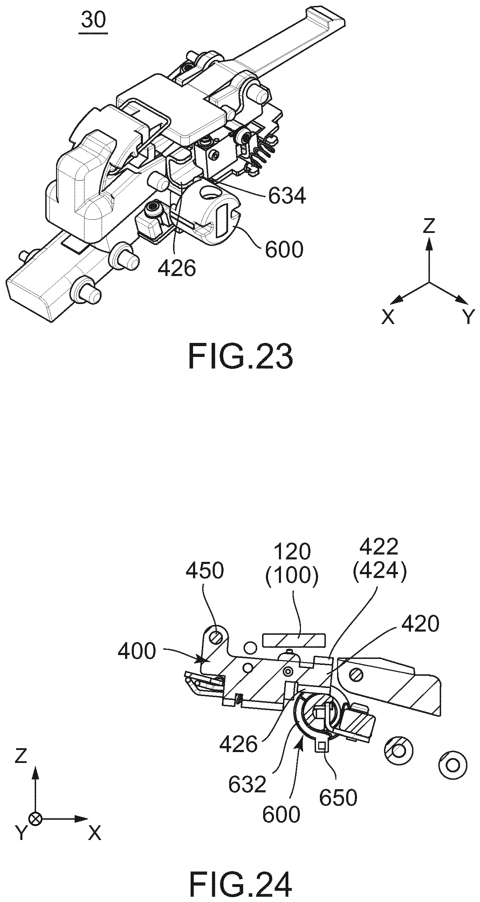

As shown in Figs. 20 and 21, the return jig 850 is fit to the jig-engagement portion 622, and then the cap 600 is rotated to the second rotation position from the first rotation position. As can be seen from Figs. 17, 20 and 21, when the cap 600 is located at the pulled-out position and is located at the second rotation position, the long end portion 632 does not overlap with the release-disabling portion 420 as seen along the lateral direction. Meanwhile, the short end portion 634 overlaps with the release-disabling portion 420 as seen along the lateral direction but is apart from the release-disabling portion 420 in the lateral direction. The thus-located cap 600 is movable to the accommodated position. More specifically, as shown in Fig. 22, the cap 600 can be pushed toward the inside of the shell 10, i.e. can be pushed leftward in the present embodiment, by using the return jig 850. As a result, as shown in Figs. 22 to 24, the cap 600 is located at the accommodated position and is located at the second rotation position.

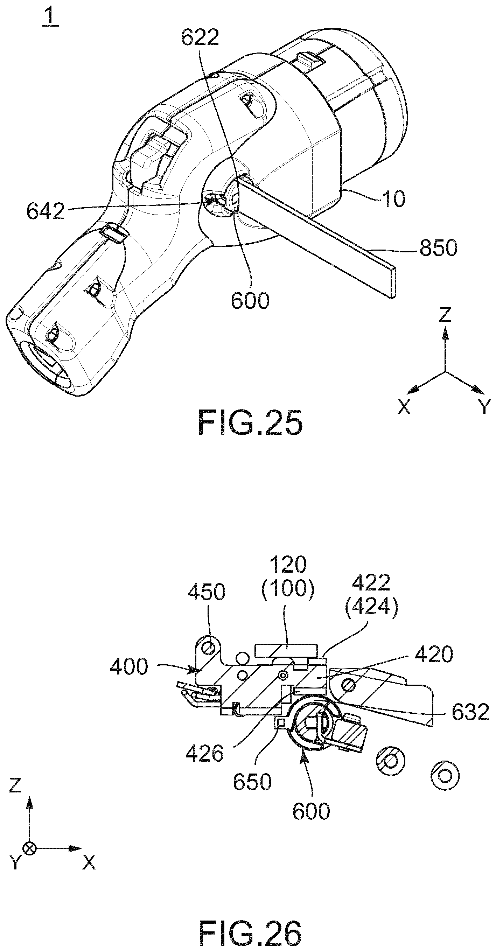

When the cap 600 is located at the accommodated position and is located at the second rotation position, the long end portion 632 overlaps with the lower end portion 426 of the release-disabling portion 420 in the lateral direction but is located below the lower end portion 426 of the release-disabling portion 420 in the upper-lower direction. As shown in Fig. 25, the thus-located cap 600 is rotated to the first rotation position from the second rotation position. As shown in Fig. 26, during this rotation, the long end portion 632 of the cap 600 lifts up the lower end portion 426 of the release-disabling portion 420, and the release-disabling portion 420 is moved to the disabling position. As a result, the switch plate 400 returns to the normal position, and thereby the charging connector 1 returns to the state shown in Fig. 1.

Although explanation of the present invention has been specifically made with reference to the embodiment, the present invention is not limited thereto but can be modified variously.

The release-disabling portion 420 of the present embodiment is formed as a part of the switch plate 400 as described above. However, the present invention is not limited thereto. The release-disabling portion 420 may be provided as a member separated from the switch plate 400, provided that the release-disabling portion 420 is movable at least in the upper-lower direction between the disabling position and the allowing position. Moreover, although the release-disabling portion 420 of the present embodiment has a C-like shaped cross-section, the present invention is not limited thereto. For example, the release-disabling portion 420 may have a block-like shape, provided that the release-disabling portion 420 has the upper end portion 422 and the lower end portion 426.

In the present embodiment described above, the operation of the lock lever 100 is performed by using the operation member 700 other than the lock lever 100. However, the present invention is not limited thereto. For example, each of the lock lever 100 and the operation member 700 may be considered as a part of a member of the charging connector 1. Moreover, the lock lever 100 may be directly operated.

Each of the main portion 610 of the cap 600 and the accommodation hole 16 of the shell 10 of the aforementioned embodiment has a circular shape in a plane perpendicular to the lateral direction. However, the present invention is not limited thereto. For example, the cap 600 may have any shape, provided that the cap 600 can be rotated and can be moved in the lateral direction. The accommodation hole 16 may have any shape, provided that the rotation and the movement of the cap 600 are not restricted. However, each of the main portion 610 of the cap 600 and the accommodation hole 16 of the shell 10 is preferred to have a circular shape in a plane perpendicular to the lateral direction so that intrusion of foreign matter into the shell 10 can be prevented.

In the aforementioned embodiment, the cap 600 is manually pulled outward in the lateral direction after the male screw 550 is detached. However, the present invention is not limited thereto. For example, the cap 600 may be configured to be automatically moved to the pulled-out position from the accommodated position when the male screw 550 is detached.

In the aforementioned embodiment, the male screw 550 can be completely detached. However, the male screw 550 may be configured so that the male screw 550 cannot be completely unscrewed. For example, the male screw 550 may be provided with a stopper. The shape of the cap 600 may be changed in accordance with the modification of the male screw 550.

## Claims

1. A charging connector (1) mateable with an inlet along a front-rear direction (X), the inlet having a locked portion, wherein:
the charging connector (1) comprises an inner unit (30) and a shell (10);
the shell (10) holds the inner unit (30);
the inner unit (30) comprises a lock lever (100), a first axis (150), a release-disabling portion (420) and a cap (600);
the shell (10) is formed with an insertion hole (12) into which a release jig (800) is insertable;
the lock lever (100)has a lock portion (110) and an abutment portion (120);
the lock lever (100) is movable about the first axis (150) in a seesaw manner;
the lock portion (110) is movable between a lock position and an unlock position in an upper-lower (Z) direction perpendicular to the front-rear direction in accordance with a seesaw movement of the lock lever (100);
when the lock portion (110) is located at the lock position under a mated state where the charging connector (1) is mated with the inlet, the lock portion (110) and the mating lock portion lock the mated state;
when the lock portion (110) is located at the unlock position under the mated state, the charging connector (1) is removable from the inlet;
the charging connector (1) is formed with a jig-insertion space (14) which is located under the abutment portion (120) of the lock lever (100) in the upper-lower (Z) direction; and
the cap (600) is attached to the shell (10) and is partially exposed outward from the shell (10), **characterized in that**
the cap (600) is movable between an accommodated position and a pulled-out position in a lateral direction (Y) perpendicular to both the front-rear direction and the upper-lower (Z) direction and is rotatable between a first rotation position and a second rotation position about an axis extending in the lateral direction (Y);
the release-disabling portion (420) is movable at least in the upper-lower (Z) direction between a disabling position and an allowing position which is located below the disabling position;
when the cap (600) is located at the accommodated position and is located at the first rotation position, the release-disabling portion (420) is located at the disabling position, and the cap (600) supports the release-disabling portion (420);
when the release-disabling portion (420) is located at the disabling position, the release-disabling portion (420) partially occupies the jig-insertion space (14), and the release jig (800) is not insertable into the jig-insertion space (14) through the insertion hole (12);
when the cap (600) is located at the pulled-out position and is located at the first rotation position, the cap (600) does not support the release-disabling portion (420), and the release-disabling portion (420) is movable to the allowing position, but the cap (600) is unmovable to the accommodated position from the pulled-out position;
when the release-disabling portion (420) is located at the allowing position, the release jig (800) is allowed to be inserted into the jig-insertion space (14) through the insertion hole (12) and is allowed to lift up the abutment portion (120) so that the lock portion (110) is moved to the unlock position;
when the cap (600) is located at the pulled-out position and is located at the second rotation position, the cap (600) is movable to the accommodated position; and
under a state where the cap (600) is located at the accommodated position and is located at the second rotation position, when the cap (600) is moved to the first rotation position from the second rotation position, the cap (600) lifts up the release-disabling portion (420), and the release-disabling portion (420) is moved to the disabling position.

2. The charging connector (1) as recited in claim 1, wherein:
the cap (600) has a first end (620) and a second end (630) in the lateral direction (Y);
the first end (620) is exposed outward from the shell (10);
the second end (630) is located inside the shell (10);
the second end (630) of the cap (600) is provided with a long end portion (632) and a short end portion (634);
the long end portion (632) extends in the lateral direction (Y) to a position which is farther from the first end (620) than another position to which the short end extends in the lateral direction (Y);
the release-disabling portion (420) has an upper end portion (422) and a lower end portion (426);
when the cap (600) is located at the accommodated position and is located at the first rotation position, the long end portion (632) supports the lower end portion (426) of the release-disabling portion (420);
when the cap (600) is located at the pulled-out position and is located at the first rotation position, the long end portion (632) is apart from the lower end portion (426) of the release-disabling portion (420) in the lateral direction (Y), and the release-disabling portion (420) is movable to the allowing position, while a position of the long end portion (632) overlaps with another position of the release-disabling portion (420) in the upper-lower (Z) direction, and the cap (600) is unmovable to the accommodated position from the pulled-out position;
when the cap (600) is located at the pulled-out position and is located at the second rotation position, the long end portion (632) does not overlap with the release-disabling portion (420) as seen along the lateral direction (Y), the short end portion (634) overlaps with the release-disabling portion (420) as seen along the lateral direction (Y) but is apart from the release-disabling portion (420) in the lateral direction (Y), and the cap (600) is movable to the accommodated position; and
under the state where the cap (600) is located at the accommodated position and is located at the second rotation position, when the cap (600) is moved to the first rotation position from the second rotation position, the long end portion (632) lifts up the lower end portion (426) of the release-disabling portion (420), and the release-disabling portion is moved to the disabling position.

3. The charging connector (1) as recited in claim 2, wherein:
the cap (600) has a main portion (610) and a projecting portion (650);
the main portion (610) has the first end (620);
the projecting portion (650) projects outward from the main portion (610) in a plane perpendicular to the lateral direction (Y);
the shell (10) is formed with an accommodation hole (16) and is provided with a stop portion (18);
the accommodation hole (16) passes through the shell (10) in the lateral direction (Y) and partially accommodates the main portion (610);
the stop portion (18) is located inside the shell (10) and is located around the accommodation hole (16); and
even if it is attempted to pull out the cap (600) outward in the lateral direction (Y) beyond the pulled-out position, the projecting portion (650) is brought into abutment with the stop portion (18) so that the cap (600) is prevented from being pulled out beyond the pulled-out position.

4. The charging connector (1) as recited in claim 3, wherein:
the shell (10) is provided with a rotation-regulation portion (20, 22); and
the rotation-regulation portion (20, 22) regulates a rotation of the cap (600) so that the cap (600) is rotatable only between the first rotation position and the second rotation position.

5. The charging connector (1) as recited in claim 3 or 4, wherein:
the accommodation hole (16) has a circular shape in a plane perpendicular to the lateral direction (Y); and
the main portion (610) has a circular outline in the plane perpendicular to the lateral direction (Y).

6. The charging connector (1) as recited in one of claims 2 to 5, wherein:
the upper end portion (422) of the release-disabling portion (420) has an exposed portion (424); and
when the release-disabling portion (420) is located at the disabling position, the exposed portion (424) is located rearward of the abutment portion (120) of the lock lever (100) and is exposed from the abutment portion (120).

7. The charging connector (1) as recited in one of claims 1 to 6, wherein the first axis (150) is located between the abutment portion (120) and the lock portion (110).

8. The charging connector (1) as recited in one of claims 1 to 7, wherein:
the charging connector (1) comprises a detection switch (300) configured to detect a position of the lock portion (110) and a switch plate (400) which supports the detection switch (300);
the switch plate (400) is movable;
a part of the switch plate (400) works as the release-disabling portion (420); and
when the release-disabling portion (420) is located at the allowing position in accordance with a movement of the switch plate (400), the detection switch (300) detects that the lock portion (110) is located at the unlock position.

9. The charging connector (1) as recited in claim 8, wherein:
the charging connector (1) comprises a second axis (450); and
the switch plate (400) is turnable about the second axis (450).

10. The charging connector (1) as recited in claim 6, wherein:
the charging connector (1) comprises a third axis (750) and an operation member (700);
the operation member (700) has an operation portion (710) and a front end portion (720);
the third axis (750) is located between the operation portion (710) and the front end portion (720);
the operation member (700) is movable about the third axis (750) in a seesaw manner;
the front end portion (720) is located under the abutment portion (120) of the lock lever (100); and
when the operation portion (710) is pushed down, the front end portion (720) pushes up the abutment portion (120) of the lock lever (100) to unlock the mated state.

11. The charging connector (1) as recited in one of claims 1 to 10, wherein the charging connector (1) comprises a mechanism for urging the release-disabling portion (420) to be moved toward the allowing position.

12. The charging connector (1) as recited in one of claims 1 to 11, wherein:
the charging connector (1) comprises a male screw (550) and a screw-receiving portion (500) formed with a female screw (510);
the cap (600) is formed with a receiving portion (640) and a hole (642) for allowing insertion of the male screw (550) therein;
the receiving portion (640) is configured to receive the screw-receiving portion (500) in the lateral direction (Y);
the hole (642) communicates with the receiving portion (640) and a space outside the cap (600) in a direction intersecting with the lateral direction (Y); and
under a normal state, the male screw (550) is screwed into the female screw (510) of the screw-receiving portion (500) through the hole (642).

## Patentansprüche

1. Ein Ladeanschluss (1), der mit einem Einlass entlang einer Vorne-Hinten-Richtung (X) verbindbar ist, wobei der Einlass einen verriegelbaren Abschnitt aufweist, wobei:
der Ladeanschluss (1) eine innere Einheit (30) und ein Gehäuse (10) umfasst;
das Gehäuse (10) die innere Einheit (30) hält;
die innere Einheit (30) einen Verriegelungshebel (100), eine erste Achse (150), einen Freigabesperrabschnitt (420) und einen Aufsatz (600) umfasst;
das Gehäuse (10) mit einer Einführöffnung (12), in die eine Freigabevorrichtung (800) einführbar ist, ausgebildet ist;
der Verriegelungshebel (100) einen Verriegelungsabschnitt (110) und einen Widerlagerabschnitt (120) aufweist;
der Verriegelungshebel (100) um die erste Achse (150) in wippender Weise bewegbar ist;
der Verriegelungsabschnitt (110) zwischen einer Verriegelungsposition und einer Entriegelungsposition in einer Oben-Unten-Richtung (Z) senkrecht zu der Vorne-Hinten-Richtung gemäß einer wippenden Bewegung des Verriegelungshebels (100) bewegbar ist;
wenn sich der Verriegelungsabschnitt (110) in der Verriegelungsposition in einem verbundenen Zustand, in dem der Ladeanschluss (1) mit dem Einlass verbunden ist, befindet, der Verriegelungsabschnitt (110) und der verbindende Verriegelungsabschnitt den verbundenen Zustand verriegeln;
wenn sich der Verriegelungsabschnitt (110) in dem verbundenen Zustand in der Entriegelungsposition befindet, der Ladeanschluss (1) von dem Einlass entfernbar ist;
der Ladeanschluss (1) mit einem Vorrichtungseinführungsraum (14), der sich unter dem Widerlagerabschnitt (120) des Verriegelungshebels (100) in der Oben-Unten-Richtung (Z) befindet, ausgebildet ist; und
der Aufsatz (600) an dem Gehäuse (10) angebracht und von dem Gehäuse (10) nach außen freiliegt, **dadurch gekennzeichnet, dass**
der Aufsatz (600) zwischen einer aufgenommenen Position und einer herausgezogenen Position in einer lateralen Richtung (Y) senkrecht zu sowohl der Vorne-Hinten-Richtung als auch der Oben-Unten-Richtung (Z) bewegbar ist und zwischen einer ersten Drehposition und einer zweiten Drehposition um eine Achse, die sich in der lateralen Richtung (Y) erstreckt, drehbar ist;
der Freigabesperrabschnitt (420) zumindest in der Oben-Unten-Richtung (Z) zwischen einer Sperrposition und einer Ermöglichungsposition, die sich unterhalb der Sperrposition befindet, bewegbar ist;
wenn sich der Aufsatz (600) in der aufgenommenen Position befindet und sich in der ersten Drehposition befindet, sich der Freigabesperrabschnitt (420) in der Sperrposition befindet, und der Aufsatz (600) stützt den Freigabesperrabschnitt (420);
wenn sich der Freigabesperrabschnitt (420) in der Sperrposition befindet, nimmt der Freigabesperrabschnitt (420) teilweise den Vorrichtungseinführungsraum (14) ein, und die Freigabevorrichtung (800) ist nicht durch die Einführungsöffnung (12) in den Vorrichtungsfreigaberaum (14) einführbar;
wenn sich der Aufsatz (600) in der herausgezogenen Position befindet und sich in der ersten Drehposition befindet, stützt des Aufsatz (600) nicht den Freigabesperrabschnitt (420), und der Freigabesperrabschnitt (420) ist in die Ermöglichungsposition bewegbar, aber der Aufsatz (600) nicht von der herausgezogenen Position in die aufgenommene Position bewegbar;
wenn sich der Freigabesperrabschnitt (420) in der Ermöglichungsposition befindet, wird es der Freigabevorrichtung (800) ermöglicht, durch die Einführungsöffnung (12) in den Vorrichtungseinführungsraum (14) eingeführt zu werden und den Widerlagerabschnitt (120) anzuheben, so dass der Verriegelungsabschnitt (110) in die Entriegelungsposition bewegt wird;
wenn sich der Aufsatz (600) in der herausgezogenen Position befindet und sich in der zweiten Drehposition befindet, der Aufsatz (600) in die aufgenommene Position bewegbar ist; und
in einem Zustand, in dem sich der Aufsatz (600) in der aufgenommenen Position befindet und sich in der zweiten Drehposition befindet, wenn der Aufsatz (600) von der zweiten Drehposition in die erste Drehposition bewegt wird, der Aufsatz (600) den Freigabesperrabschnitt (420) anhebt, und der Freigabesperrabschnitt (420) in die Sperrposition bewegt wird.

2. Der Ladeanschluss (1) nach Anspruch 1, wobei:
der Aufsatz (600) ein erste Ende (620) und ein zweites Ende (630) in der lateralen Richtung (Y) aufweist;
das erste Ende (620) von dem Gehäuse (10) nach außen freiliegt;
sich das zweite Ende (630) im Gehäuse (10) befindet;
das zweite Ende (630) des Aufsatzes (600) mit einem langen Endabschnitt (632) und einem kurzen Endabschnitt (634) versehen ist;
sich der lange Endabschnitt (632) in der lateralen Richtung (Y) zu einer Position erstreckt, die weiter entfernt von dem ersten Ende (620) als eine andere Position, zu der sich das kurze Ende in der lateralen Richtung (Y) erstreckt, ist;
der Freigabesperrabschnitt (420) einen oberen Endabschnitt (422) und einen unteren Endabschnitt (426) aufweist;
wenn sich der Aufsatz (600) in der aufgenommenen Position befindet und sich in der ersten Drehposition befindet, der lange Endabschnitt (632) den unteren Endabschnitt (426) des Freigabesperrabschnitts (420) stützt;
wenn sich der Aufsatz (600) in der herausgezogenen Position befindet und sich in der ersten Drehposition befindet, der lange Endabschnitt (632) in der lateralen Richtung (Y) von dem unteren Endabschnitt (426) des Freigabesperrabschnitts (420) getrennt ist, und der Freigabesperrabschnitt (420) in die Ermöglichungsposition bewegbar ist, während eine position des langen Endabschnitts (632) mit einer anderen Position des Freigabesperrabschnitts (420) in der Oben-Unten-Richtung (Z) überlappt, und der Aufsatz (600) nicht von der herausgezogenen Position in die aufgenommene Position bewegbar ist;
wenn sich der Aufsatz (600) in der herausgezogenen Position befindet und sich in der zweiten Drehposition befindet, der lange Endabschnitt (632) gesehen entlang der lateralen Richtung (Y) nicht mit dem Freigabesperrabschnitt (420) überlappt, der kurze Endabschnitt (634) gesehen entlang der lateralen Richtung (Y) mit dem Freigabesperrabschnitt (420) überlappt, aber von dem Freigabesperrabschnitt (420) in der lateralen Richtung (Y) getrennt ist, und der Aufsatz (600) in die aufgenommene Position bewegbar ist; und
in einen Zustand, in dem sich der Aufsatz in der aufgenommenen Position befindet und sich in der zweiten Drehposition befindet, wenn der Aufsatz (600) von der zweiten Drehposition in die erste Drehposition bewegt wird, der lange Endabschnitt (632) den unteren Endabschnitt (426) des Freigabesperrabschnitts (420) anhebt, und der Freigabesperrabschnitt in die Sperrposition bewegt wird.

3. Der Ladeanschluss (1) nach Anspruch 2, wobei:
der Aufsatz (600) einen Hauptabschnitt (610) und einen hervorstehenden Abschnitt (650) aufweist;
der Hauptabschnitt (610) ein erstes Ende (620) aufweist;
der hervorstehende Abschnitt (650) von dem Hauptkörperabschnitt (610) in einer Ebene senkrecht zur lateralen Richtung (Y) nach außen vorsteht:
das Gehäuse (10) mit einer Aufnahmeöffnung (16) ausgebildet ist und mit einem Stoppabschnitt (18) versehen ist;
die Aufnahmeöffnung (16) das Gehäuse (10) in der lateralen Richtung (Y) durchläuft und den Hauptabschnitt (610) teilweise aufnimmt;
sich der Stoppabschnitt (18) im Gehäuse (10) befindet und um die Aufnahmeöffnung herum angeordnet ist; und
selbst wenn versucht wird, den Aufsatz (600) in der lateralen Richtung (Y) über die herausgezogene Position hinaus nach außen herauszuziehen, der vorstehende Abschnitt (650) in Anlage mit dem Stoppabschnitt (18) gebracht wird, so dass der Aufsatz (600) daran gehindert wird, über die herausgezogene Position hinaus herausgezogen zu werden.

4. Der Ladeanschluss (1) nach Anspruch 3, wobei:
das Gehäuse (10) mit einem Drehregulierungsabschnitt (20, 22) versehen ist; und
der Drehregulierungsabschnitt (20, 22) eine Drehung des Aufsatzes (600) reguliert, so dass der Aufsatz (600) nur zwischen der ersten Drehposition und der zweiten Drehposition drehbar ist.

5. Der Ladeanschluss (1) nach Anspruch 3 oder 4, wobei:
die Aufnahmeöffnung (16) in einer Ebene senkrecht zur lateralen Richtung (Y) eine runde Form aufweist; und
der Hauptabschnitt (610) in der Ebene senkrecht zur lateralen Richtung (Y) einen runden Umfang aufweist.

6. Der Ladeanschluss (1) nach einem der Ansprüche 2 bis 5, wobei:
der obere Endabschnitt (422) des Freigabesperrabschnitts (420) einen freiliegenden abschnitt (424) aufweist; und
wenn sich der Freigabesperrabschnitt (420) in der Sperrposition befindet, sich der freiliegende Abschnitt (424) hinter dem Widerlagerabschnitt (120) des Verriegelungshebels (100) befindet und von dem Widerlagerabschnitt (120) freiliegend ist.

7. Der Ladeanschluss (1) nach einem der Ansprüche 1 bis 6, wobei sich die erste Achse (150) zwischen dem Widerlagerabschnitt (120) und dem Verriegelungsabschnitt (110) befindet.

8. Der Ladeanschluss (1) nach einem der Ansprüche 1 bis 7, wobei:
der Ladeanschluss (1) einen Detektionsschalter (300), der dazu konfiguriert ist, eine Position des Verriegelungsabschnitts (110) zu detektieren, und eine Schalterplatte (400), die den Detektionsschalter (300) trägt, umfasst;
die Schalterplatte (400) bewegbar ist;
ein Teil der Schalterplatte (400) als der Freigabesperrabschnitt (420) fungiert; und
wenn sich der Freigabesperrabschnitt (420) in der Ermöglichungsposition gemäß einer Bewegung der Schalterplatte (400) befindet, der Detektionsschalter (300) detektiert, dass sich der Verriegelungsabschnitt (110) in der Entriegelungsposition befindet.

9. Der Ladeanschluss (1) nach Anspruch 8, wobei:
der Ladeanschluss (1) eine zweite Achse (450) umfasst; und
die Ladeplatte (400) um die zweite Achse (450) drehbar ist.

10. Der Ladeanschluss (1) nach Anspruch 6, wobei:
der Ladeanschluss (1) eine dritte Achse (750) und ein Betätigungselement (700) umfasst;
das Betätigungselement (700) einen Betätigungsabschnitt (710) und einen vorderen Endabschnitt (720) aufweist;
sich die dritte Achse (750) zwischen dem Betätigungsabschnitt (710) und dem vorderen Endabschnitt (720) befindet;
das Betätigungselement (700) um die dritte Achse in wippender Weise bewegbar ist;
sich der vordere Endabschnitt (720) unter dem Widerlagerabschnitt (120) des Verriegelungshebels (100) befindet; und
wenn der Betätigungsabschnitt (710) nach unten gedrückt wird, der vordere Endabschnitt (720) den Widerlagerabschnitt (120) des Verriegelungshebels (100) nach oben drückt, um den verbundenen Zustand zu entriegeln.

11. Der Ladeanschluss (1) nach einem der Ansprüche 1 bis 10, wobei der Ladeanschluss (1) einen Mechanismus, der den Freigabesperrabschnitts (420) dazu drängt, in Richtung der Ermöglichungsposition bewegt zu werden.

12. Der Ladeanschluss (1) nach einem der Ansprüche 1 bis 11, wobei:
der Ladeanschluss (1) eine Außengewinde-Schraube (550) und einen Schraubenaufnahmeabschnitt (500), der mit einem Innengewinde (510) ausgebildet ist, umfasst;
der Aufsatz (600) mit einem Aufnahmeabschnitt (640) und einer Öffnung (642) ausgebildet ist, um eine Einführung der Außengewinde-Schraube (550) darin zu ermöglichen;
der Aufnahmeabschnitt (640) dazu konfiguriert ist, den Schraubenaufnahmeabschnitt (500) in der lateralen Richtung (Y) aufzunehmen;
Die Öffnung (642) mit dem Aufnahmeabschnitt (640) und einem Raum außerhalb des Aufsatzes (600) in einer Richtung, die die laterale Richtung (Y) schneidet, in Verbindung steht; und
in einem Normalzustand die Außengewinde-Schraube (550) durch die Öffnung (642) in das Innengewinde (510) des Schraubenaufnahmeabschnitts (500) eingeschraubt ist.

## Revendications

1. Connecteur de chargeur (1) pouvant s'accoupler avec une entrée le long d'une direction avant-arrière (X), l'entrée ayant une partie verrouillée, dans lequel :
le connecteur de chargeur (1) comprend une unité interne (30) et une coque (10) ;
la coque (10) maintient l'unité interne (30) ;
l'unité interne (30) comprend un levier de verrouillage (100), un premier axe (150), une partie de désactivation - libération (420) et un capuchon (600) ;
la coque (10) est formée avec un trou d'insertion (12) dans lequel un gabarit de libération (800) est insérable ;
le levier de verrouillage (100) a une partie de verrouillage (110) et une partie de butée (120) ;
le levier de verrouillage (100) est mobile autour du premier axe (150) de manière basculante ;
la partie de verrouillage (110) est mobile entre une position de verrouillage et une position de déverrouillage dans une direction supérieure-inférieure (Z) perpendiculaire à la direction avant-arrière en fonction d'un mouvement basculant du levier de verrouillage (100) ;
lorsque la partie de verrouillage (110) est située à la position de verrouillage dans un état accouplé où le connecteur de chargeur (1) est accouplé avec l'entrée, la partie de verrouillage (110) et la partie de verrouillage accouplée verrouillent l'état accouplé ;
lorsque la partie de verrouillage (110) est située à la position de déverrouillage dans l'état accouplé, le connecteur de chargeur (1) peut être retiré de l'entrée ;
le connecteur de chargeur (1) est formé avec un espace d'insertion de gabarit (14) qui est situé sous la partie de butée (120) du levier de verrouillage (100) dans la direction supérieure-inférieure (Z) ; et
le capuchon (600) est fixé à la coque (10) et est partiellement exposé à l'extérieur de la coque (10), **caractérisé en ce que**
le capuchon (600) est mobile entre une position logée et une position extraite dans une direction latérale (Y) perpendiculaire à la fois à la direction avant-arrière et à la direction supérieure-inférieure (Z) et peut tourner entre une première rotation et une seconde rotation autour d'un axe s'étendant dans la direction latérale (Y) ;
la partie de désactivation - libération (420) est mobile au moins dans la direction supérieure-inférieure (Z) entre une position de désactivation et une position d'autorisation qui est située en dessous de la position de désactivation ;
lorsque le capuchon (600) est situé à la position logée et est situé à la première position de rotation, la partie de désactivation - libération (420) est située à la position de désactivation, et le capuchon (600) supporte la partie de désactivation - libération (420) ;
lorsque la partie de désactivation - libération (420) est située à la position de désactivation, la partie de désactivation - libération (420) occupe partiellement l'espace d'insertion de gabarit (14), et le gabarit de libération (800) ne peut pas être inséré dans l'espace d'insertion de gabarit (14) à travers le trou d'insertion (12) ;
lorsque le capuchon (600) est situé dans la position extraite et est situé dans la première position de rotation, le capuchon (600) ne supporte pas la partie de désactivation - libération (420), et la partie de désactivation - libération (420) est mobile vers la position d'autorisation, mais le capuchon (600) n'est pas mobile vers la position logée à partir de la position extraite ;
lorsque la partie de désactivation - libération (420) est située dans la position d'autorisation, le gabarit de libération (800) peut être inséré dans l'espace d'insertion de gabarit (14) à travers le trou d'insertion (12) et peut soulever la partie de butée (120) de sorte que la partie de verrouillage (110) est déplacée vers la position de déverrouillage ;
lorsque le capuchon (600) est situé à la position extraite et est situé à la seconde position de rotation, le capuchon (600) est mobile vers la position logée ; et
dans un état où le capuchon (600) est situé à la position logée et est situé à la seconde position de rotation, lorsque le capuchon (600) est déplacé vers la première position de rotation à partir de la seconde position de rotation, le capuchon (600) soulève la partie de désactivation - libération (420), et la partie de désactivation - libération (420) est déplacée vers la position de désactivation.

2. Connecteur de chargeur (1) tel que décrit dans la revendication 1, dans lequel :
le capuchon (600) a une première extrémité (620) et une seconde extrémité (630) dans la direction latérale (Y) ;
la première extrémité (620) est exposée à l'extérieur de la coque (10) ;
la seconde extrémité (630) est située à l'intérieur de la coque (10) ;
la seconde extrémité (630) du capuchon (600) est pourvue d'une partie d'extrémité longue (632) et d'une partie d'extrémité courte (634) ;
la partie d'extrémité longue (632) s'étend dans la direction latérale (Y) jusqu'à une position qui est plus éloignée de la première extrémité (620) qu'une autre position à laquelle l'extrémité courte s'étend dans la direction latérale (Y) ;
la partie de désactivation - libération (420) a une partie d'extrémité supérieure (422) et une partie d'extrémité inférieure (426) ;
lorsque le capuchon (600) est situé à la position logée et est situé à la première position de rotation, la partie d'extrémité longue (632) supporte la partie d'extrémité inférieure (426) de la partie de désactivation - libération (420) ;
lorsque le capuchon (600) est situé dans la position extraite et est situé dans la première position de rotation, la partie d'extrémité longue (632) est séparée de la partie d'extrémité inférieure (426) de la partie de désactivation - libération (420) dans la direction latérale (Y), et la partie de désactivation - libération (420) est mobile vers la position d'autorisation, tandis qu'une position de la partie d'extrémité longue (632) chevauche une autre position de la partie de désactivation - libération (420) dans la direction supérieure-inférieure (Z), et le capuchon (600) n'est pas mobile vers la position logée à partir de la position extraite ;
lorsque le capuchon (600) est situé à la position extraite et est situé à la seconde position de rotation, la partie d'extrémité longue (632) ne chevauche pas la partie de désactivation - libération (420) telle que vue le long de la direction latérale (Y), la partie d'extrémité courte (634) chevauche la partie de désactivation - libération (420) telle que vue le long de la direction latérale (Y) mais est séparée de la partie de désactivation - libération (420) dans la direction latérale (Y), et le capuchon (600) est mobile vers la position logée ; et
dans l'état où le capuchon (600) est situé à la position logée et est situé à la seconde position de rotation, lorsque le capuchon (600) est déplacé vers la première position de rotation à partir de la seconde position de rotation, la partie d'extrémité longue (632) soulève la partie d'extrémité inférieure (426) de la partie de désactivation - libération (420), et la partie de désactivation - libération est déplacée vers la position de désactivation.

3. Connecteur de chargeur (1) selon la revendication 2, dans lequel :
le capuchon (600) a une partie principale (610) et une partie saillante (650) ;
la partie principale (610) a la première extrémité (620) ;
la partie saillante (650) fait saillie vers l'extérieur de la partie principale (610) dans un plan perpendiculaire à la direction latérale (Y) ;
la coque (10) est formée avec un trou de logement (16) et est pourvue d'une partie d'arrêt (18) ;
le trou de logement (16) traverse la coque (10) dans la direction latérale (Y) et reçoit partiellement la partie principale (610) ;
la partie d'arrêt (18) est située à l'intérieur de la coque (10) et est située autour du trou de logement (16) ; et
même si l'on tente de tirer le capuchon (600) vers l'extérieur dans la direction latérale (Y) au-delà de la position extraite, la partie saillante (650) est amenée en butée contre la partie d'arrêt (18) de sorte que le capuchon (600) ne peut pas être tiré au-delà de la position extraite.

4. Connecteur de chargeur (1) selon la revendication 3, dans lequel :
la coque (10) est pourvue d'une partie de régulation de rotation (20, 22) ; et
la partie de régulation de rotation (20, 22) régule une rotation du capuchon (600) de sorte que le capuchon (600) puisse tourner uniquement entre la première position de rotation et la seconde position de rotation.

5. Connecteur de chargeur (1) tel que décrit dans la revendication 3 ou 4, dans lequel :
le trou de logement (16) a une forme circulaire dans un plan perpendiculaire à la direction latérale (Y) ; et
la partie principale (610) a un contour circulaire dans le plan perpendiculaire à la direction latérale (Y).

6. Connecteur de chargeur (1) tel que décrit dans l'une des revendications 2 à 5, dans lequel :
la partie d'extrémité supérieure (422) de la partie de désactivation - libération (420) a une partie exposée (424) ; et
lorsque la partie de désactivation - libération (420) est située dans la position de désactivation, la partie exposée (424) est située à l'arrière de la partie de butée (120) du levier de commande (100) et est exposée depuis la partie de butée (120).

7. Connecteur de chargeur (1) tel que récité dans l'une des revendications 1 à 6, dans lequel le premier axe (150) est situé entre la partie de butée (120) et la partie de verrouillage (110).

8. Connecteur de chargeur (1) tel que décrit dans l'une des revendications 1 à 7, dans lequel :
le connecteur de chargeur (1) comprend un commutateur de détection (300) configuré pour détecter une position de la partie de verrouillage (110) et une plaque de commutation (400) qui supporte le commutateur de détection (300) ;
la plaque de commutation (400) est mobile ;
une partie de la plaque de commutation (400) fonctionne comme la partie de désactivation - libération (420) ; et
lorsque la partie de désactivation - libération (420) est située à la position d'autorisation conformément à un mouvement de la plaque de commutation (400), le commutateur de détection (300) détecte que la partie de verrouillage (110) est située à la position de déverrouillage.

9. Connecteur de chargeur (1) selon la revendication 8, dans lequel :
le connecteur de chargeur (1) comprend un second axe (450) ; et
la plaque de commutation (400) peut tourner autour du second axe (450).

10. Connecteur de chargeur (1) selon la revendication 6, dans lequel :
le connecteur de chargeur (1) comprend un troisième axe (750) et un élément de fonctionnement (700) ;
l'élément de fonctionnement (700) a une partie de fonctionnement (710) et une partie d'extrémité avant (720) ;
le troisième axe (750) est situé entre la partie de fonctionnement (710) et la partie d'extrémité avant (720) ;
l'élément d'actionnement (700) est mobile autour du troisième axe (750) d'une manière basculante ;
la partie d'extrémité avant (720) est située sous la partie de butée (120) du levier de verrouillage (100) ; et
lorsque la partie de fonctionnement (710) est poussée vers le bas, la partie d'extrémité avant (720) pousse vers le haut la partie de butée (120) du levier de verrouillage (100) pour déverrouiller l'état accouplé.

11. Connecteur de chargeur (1) tel que décrit dans l'une des revendications 1 à 10, dans lequel le connecteur de chargeur (1) comprend un mécanisme pour pousser la partie de désactivation - libération (420) à être déplacée vers la position d'autorisation.

12. Connecteur de chargeur (1) tel que décrit dans l'une des revendications 1 à 11, dans lequel :
le connecteur de chargeur (1) comprend une vis mâle (550) et une partie de réception de vis (500) formée avec une vis femelle (510) ;
le capuchon (600) est formé avec une partie de réception (640) et un trou (642) pour permettre l'insertion de la vis mâle (550) dans celui-ci ;
la partie de réception (640) est configurée pour recevoir la partie de réception de vis (500) dans la direction latérale (Y) ;
le trou (642) communique avec la partie de réception (640) et un espace à l'extérieur du capuchon (600) dans une direction coupant la direction latérale (Y) ; et
dans un état normal, la vis mâle (550) est vissée dans la vis femelle (510) de la partie de réception de vis (500) à travers le trou (642).
